# DEMANDE DE BREVET EUROPEEN

(11) **EP 4 759 751 A1**
(43) Date de publication de la demande: **17.06.2026**
(21) Numéro de dépôt: 25222454.8
(22) Date de dépôt: 11.12.2025
(51) Int. Cl.: B65G 1/04, B65G 1/137

(54) **PROCEDE DE GESTION D'UNE STATION DE PREPARATION DE COMMANDES**

(30) Priorité: 13.12.2024 FR 2414115
(71) Demandeur: Exotec Product France, 59170 Croix (FR)
(72) Inventeur: ESQUERRE-POURTERE, Louis, 59650 VILLENEUVE D'ASCQ (FR)
(74) Mandataire: Plasseraud IP

(57) **Abrégé**

L'invention concerne un procédé de gestion d'une station de préparation de commandes, au niveau de laquelle un opérateur (3) humain ou robotisé place ou retire des articles dans des conteneurs portés par des véhicules autoguidés circulant sur une piste de la station (1), comprenant, à chaque changement d'opérateur (3) au niveau de la station (1), le cycle suivant : l'envoi (62), de la station (1) vers un serveur (53) déporté, d'une requête de personnalisation incluant un identifiant de l'opérateur (3), la détermination (63), par le serveur (53) déporté, d'une information d'ajustement de la hauteur de la piste à l'opérateur (3), le renvoi (64), du serveur (53) déporté vers la station (1), d'une réponse de personnalisation incluant l'information d'ajustement, l'ajustement (65), de la hauteur de la piste par rapport au sol, réalisé automatiquement par un mécanisme interne (4) de la station (1), à partir de l'information d'ajustement.

## Description

### DOMAINE DE L'INVENTION

L'invention concerne le domaine technique des procédés de gestion des stations de préparation de commandes, également appelées stations d'intervention, en particulier au sein des systèmes de stockage automatisé « ASRS » (de l'anglais « Automated Storage and Retrieval System »). Des véhicules autoguidés, également appelés véhicules de transport automatique, se déplacent sur une ou plusieurs pistes, également appelées pistes de convoyage.

### ARRIERE PLAN TECHNOLOGIQUE DE L'INVENTION

Sur des convoyeurs de marchandises, des opérateurs sont amenés à réaliser un certain nombre d'interventions sur des commandes contenues dans des conteneurs acheminés par les convoyeurs. A cette fin, il peut être prévu une ou plusieurs stations d'intervention. Par "convoyeur", on entend un système ou un dispositif conçu pour transporter des marchandises, des produits ou des matériaux d'un point à un autre à l'intérieur d'une installation logistique ou industrielle. Ces systèmes permettent d'automatiser le déplacement des charges, d'optimiser les flux de travail et d'améliorer l'efficacité des opérations, en réduisant les efforts humains et le temps nécessaire pour le transport. L'ergonomie des postes d'intervention est un point important des systèmes de stockage automatisé.

Les tâches effectuées peuvent être pénibles si la position de l'opérateur n'est pas bien adaptée. Par ailleurs, les articles ou conteneurs acheminés sur lesquels les opérateurs interviennent peuvent être de tailles variées. Une telle diversité de conteneurs peut engendrer un changement fréquent de position.

Il est connu de positionner des plateformes réglables à côté des stations d'intervention pour pouvoir adapter la hauteur de travail de l'opérateur. En effet, plutôt que d'être positionné sur le sol, ou sur une structure fixe, l'opérateur peut monter sur une plateforme, et ainsi abaisser ou surélever sa hauteur pour améliorer son confort.

Un tel réglage peut être effectué notamment en fonction de la taille de l'opérateur, afin qu'il puisse adopter une hauteur de travail parfaitement adaptée à sa morphologie. Toutefois, cette considération n'est qu'un exemple parmi de nombreuses situations où un ajustement de hauteur peut s'avérer nécessaire. Par exemple, certains opérateurs préfèrent limiter l'amplitude de leurs mouvements pour réduire la fatigue musculaire, ce qui nécessite de positionner la zone de travail à une hauteur spécifique. De même, une vision imparfaite peut inciter un opérateur à se rapprocher davantage des articles afin de mieux les identifier ou les manipuler avec précision.

Par ailleurs, certaines tâches impliquent la manipulation d'articles lourds ou encombrants, pour lesquels il est essentiel de minimiser la distance entre les bras ou les mains de l'opérateur et les articles eux-mêmes, réduisant ainsi les contraintes physiques et améliorant l'ergonomie. La nature des commandes à traiter peut également jouer un rôle déterminant : des articles nécessitant une grande précision, une manipulation délicate ou un effort accru pour leur prise en main appellent souvent à un ajustement fin de la hauteur de travail. En définitive, il existe donc un certain nombre de situations de travail qui impliquent un ajustement de la hauteur de travail de l'opérateur.

Cela étant, les plateformes en hauteur présentent les inconvénients suivants.

Tout d'abord, leur présence implique nécessairement une marche à franchir pour y accéder, ce qui oblige les opérateurs à monter et descendre régulièrement, augmentant ainsi le risque de chutes. Ce risque est d'autant plus important, que plusieurs relèves d'opérateurs peuvent avoir lieu chaque jour sur un même poste, amplifiant les probabilités d'incidents.

Ensuite, ces plateformes nécessitent l'installation de structures volumineuses et coûteuses, qui encombrent l'entrepôt et réduisent significativement l'espace disponible. Cette diminution impacte non seulement la circulation des opérateurs et des équipements, mais également la capacité de stockage, essentielle pour optimiser les opérations logistiques. De plus, une fois sur la plateforme, l'opérateur est confiné dans un espace restreint. Pour pallier cette limitation et couvrir plusieurs postes ou zones de travail, on peut être amené à concevoir des plateformes de grande taille, ce qui accentue encore les problèmes d'encombrement, de coûts et d'adaptation à l'espace de l'entrepôt.
Il est également connu d'incliner des conteneurs acheminés par un véhicule jusqu'à un opérateur afin de faciliter leur accès par l'opérateur. Dans le document EP4385922, l'angle d'inclinaison du conteneur peut en plus être adapté à la taille de l'opérateur. Toutefois, le degré d'inclinaison est forcément limité.
Dans le document WO2024013453, il est prévu d'ajuster la hauteur de l'emplacement de stationnement du véhicule transportant un conteneur en fonction des dimensions du conteneur transporté. Mais cet ajustement n'est applicable que pour des opérateurs de taille moyenne.

La présente divulgation a donc pour objectif de pallier au moins en partie les inconvénients de l'état de la technique cités ci-dessus.

Selon un art antérieur précédemment décrit, il est donc connu l'utilisation de plateformes additionnelles, mobiles par rapport à la zone de préparation de commandes par l'opérateur :
> relativement encombrantes au sein de l'ensemble du système de stockage,
> présentant de plus une ergonomie relativement limitée pour les opérateurs humains devant les utiliser,
➢ de telles plateformes étant, pour les opérateurs robotisés, de type bras robotisé par exemple,
   o soit peu compatibles avec ces opérateurs robotisés fixes, en raison de leur caractère mobile,
   o soit plutôt complexes si elles devaient être rendues fixes par rapport à la zone de préparation de commandes par l'opérateur robotisé qui lui est fixe.

### OBJETS DE L'INVENTION

L'invention a identifié que les difficultés rencontrées dans l'art antérieur découlaient de la stratégie sous-jacente, qui consistait à adapter l'opérateur - qu'il soit humain ou robotisé, deux types très différents - à la piste de la station de préparation de commandes.

L'invention repose sur une stratégie inverse, consistant à rendre la piste de la station de préparation de commandes adaptable à l'opérateur, qu'il soit humain ou robotisé. Lorsqu'il s'agit d'un opérateur humain, cette adaptation concerne une large catégorie d'hommes et de femmes. Plus précisément, elle vise à adapter la hauteur de cette piste en la rendant ajustable en fonction de l'opérateur.

Cette hauteur de piste est le paramètre clé pour optimiser le poste de travail de l'opérateur.

En effet, pour un opérateur humain, c'est essentiellement la variation de la hauteur optimale de travail lors de la préparation des commandes qui est la plus contraignante pour cet opérateur humain et qui va lui demander le plus d'efforts et le plus de décalages par rapport à une position naturelle et optimisée ou par rapport à un gestuelle naturelle et optimisée pour réaliser les commandes, comme se lever, se baisser, se pencher, etc ..., entraînant deux inconvénients importants :
➢ un risque notable pour la dégradation de la santé (lumbago, crampes, fatigue et blocage des articulations, etc ...) de l'opérateur humain,
> un risque de chute d'efficacité de l'opérateur humain à son poste de travail, puisqu'il ne travaille pas dans la meilleure position ou avec la meilleure gestuelle,
➢ l'invention visant ici à améliorer à la fois la santé et le rendement de l'opérateur humain, et non pas à sacrifier l'un pour l'autre de manière hélas plus traditionnelle,
> et toujours dans un souci d'épargner l'opérateur humain, c'est un mécanisme interne à la station de préparation de commandes, qui permet de modifier la hauteur de cette piste, et ceci de manière pratiquement automatique (ne demandant à l'opérateur humain que de s'identifier à son poste de travail, ce qu'il fait déjà par ailleurs), tout en restant simple et efficace.

Par ailleurs, pour un opérateur robotisé, il permet l'utilisation d'un robot plus simple, plus efficace et plus robuste, car l'opérateur robotisé n'a besoin de pouvoir travailler qu'à une seule et unique hauteur à laquelle c'est la piste de la station de préparation de commandes qui va s'adapter, et éventuellement également en fonction du type de véhicule autoguidé circulant sur la piste ainsi qu'en fonction du type de conteneur porté par le véhicule autoguidé circulant sur la piste. D'où une diminution importante des coûts, avec l'utilisation d'un robot plus simple et plus robuste.

Par conséquent, à un poste de travail au niveau d'une piste réglable en hauteur par un mécanisme interne de manière automatique, l'invention permet :
➢ d'améliorer la santé et le rendement, sur le long terme, d'un opérateur humain,
> et/ou de simplifier et de faire durer plus longtemps, l'opérateur robotisé utilisé,
➢ de cumuler les deux familles d'avantages pour les stations de préparation de commandes complexes, utilisant à la fois un ou plusieurs opérateurs humains associé(s) à un ou plusieurs opérateurs robotisé(s), un opérateur robotisé étant avantageusement un robot ou une installation robotisée,
➢ tout en réduisant l'encombrement au sol au niveau de la station de préparation de commandes, ce qui en retour :
   o limite également le risque de chute et d'accident dans l'environnement de la station de préparation de commandes,
   o et améliore également le rendement global de la station de préparation de commandes.

A cette fin, la présente invention propose un procédé de gestion d'une station de préparation de commandes, au niveau de laquelle un opérateur humain ou robotisé place ou retire des articles dans des conteneurs portés par des véhicules autoguidés circulant sur une piste de la station, comprenant, à chaque changement d'opérateur au niveau de la station, le cycle suivant :
> l'envoi, de la station vers un serveur déporté également rattaché à plusieurs autres stations de préparation de commandes, d'une requête de personnalisation incluant un identifiant de l'opérateur,
➢ la détermination, par le serveur déporté, à partir de l'identifiant de l'opérateur, d'une information d'ajustement de la hauteur de la piste à l'opérateur,
➢ le renvoi, du serveur déporté vers la station, d'une réponse de personnalisation incluant l'information d'ajustement,
➢ l'ajustement, de la hauteur de la piste par rapport au sol, réalisé automatiquement par un mécanisme interne de la station, à partir de l'information d'ajustement.

L'invention a également identifié que cette nouvelle stratégie d'adaptation à l'opérateur pouvait plus largement être étendue à une stratégie d'adaptation à un changement, non plus seulement d'opérateur, mais plus généralement à un changement de configuration et/ou de fonctionnement de la station de préparation de commandes. Un exemple préférentiel de changement de configuration de la station de préparation de commandes correspond à un changement d'opérateur. Un exemple préférentiel de changement de fonctionnement de la station de préparation de commandes correspond à un changement de type de conteneur, par exemple un changement de sa forme, de l'une ou plusieurs de ses dimensions comme notamment sa profondeur , ou bien à un changement de chargement de conteneur, par exemple un changement de type d'articles contenus dans le conteneur ou bien encore à un changement de type de rangement des articles à l'intérieur du conteneur.

Là encore, la stratégie est basée sur le même nouveau principe d'adapter la station de préparation de commandes au changement d'environnement, plutôt que, pour éviter à la station de préparation de commandes la nécessité de devoir s'y adapter, de devoir imposer à chaque opérateur, humain ou robotisé, cette adaptation, par le biais de contraintes et d'efforts plus importants.

Selon l'invention, il est alors prévu un procédé de gestion d'une station de préparation de commandes, au niveau de laquelle un opérateur humain ou robotisé place ou retire des articles dans des conteneurs portés par des véhicules autoguidés circulant sur une piste de la station, comprenant, lors d'un changement de configuration et/ou de fonctionnement au niveau de la station, le cycle suivant :
➢ la détermination, par un serveur déporté également rattaché à plusieurs autres stations de préparation de commandes, à partir du changement de configuration et/ou de fonctionnement au niveau de la station, d'une information d'ajustement de la hauteur de la piste au changement de configuration et/ou de fonctionnement au niveau de la station,
➢ le renvoi, du serveur déporté vers la station, de ladite information d'ajustement,
➢ l'ajustement, de la hauteur de la piste par rapport au sol, réalisé automatiquement par un mécanisme interne de la station, à partir de ladite information d'ajustement.

Dans une première famille de modes de réalisation, il est alors aussi prévu un procédé de gestion d'une station de préparation de commandes, comprenant :
➢ le changement de configuration et/ou de fonctionnement inclut un changement d'opérateur,
➢ ledit cycle comprend aussi, avant la détermination, l'envoi, de la station vers le serveur déporté, d'un identifiant de l'opérateur,
➢ ladite détermination, est réalisée par le serveur déporté, à partir de l'identifiant de l'opérateur, et détermine une information d'ajustement de la hauteur de la piste à l'opérateur.

Dans une deuxième famille alternative de modes de réalisation, il est alors également prévu un procédé de gestion d'une station de préparation de commandes comprenant :
➢ le changement de configuration et/ou de fonctionnement inclut un changement de type de conteneur et/ou un changement de chargement de conteneur arrivant sur la piste, sans changement d'opérateur,
➢ la détermination de l'information d'ajustement de la hauteur de la piste est réalisée de manière à ce que, la hauteur cumulée, à partir du sol, du nouveau type de conteneur porté par le véhicule autoguidé circulant sur la piste, reste adaptée à l'opérateur.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets de l'invention précitée.

De préférence, l'information d'ajustement de la hauteur de la piste est déterminée de manière à ce que la hauteur cumulée, à partir du sol, du conteneur porté par le véhicule autoguidé circulant sur la piste, soit adaptée à l'opérateur.

Ainsi, est réalisée non seulement l'adaptation de la piste à l'opérateur, mais aussi l'adaptation de la piste au type de conteneur porté par le véhicule autoguidé circulant sur la piste.

De préférence, l'information d'ajustement de la hauteur de la piste est déterminée de manière à ce que la hauteur cumulée, à partir du sol, du conteneur porté par le véhicule autoguidé circulant sur la piste, soit adaptée à la hauteur de l'opérateur debout sur le sol.

Ainsi, est réalisée non seulement l'adaptation de la piste à l'opérateur, mais aussi l'adaptation de la piste au type de conteneur porté par le véhicule autoguidé circulant sur la piste.

De préférence, après ledit ajustement, à chaque fois qu'un nouveau type de conteneur arrive sur la piste, le procédé de gestion d'une station de préparation de commandes comprend le cycle conteneur suivant :
➢ l'adaptation dynamique, par le serveur déporté, de l'information d'ajustement de la hauteur de la piste de manière à ce que, la hauteur cumulée, à partir du sol, du nouveau type de conteneur porté par le véhicule autoguidé circulant sur la piste, reste adaptée à l'opérateur,
➢ le renvoi, du serveur déporté vers la station, d'une information d'ajustement dynamiquement adaptée,
➢ l'ajustement, de la hauteur de la piste par rapport au sol, réalisé automatiquement et dynamiquement par le mécanisme interne de la station, à partir de l'information d'ajustement dynamiquement adaptée, au moment où le nouveau type de conteneur porté par le véhicule autoguidé circulant sur la piste arrive au niveau de l'opérateur.

Ainsi, est réalisée non seulement l'adaptation de la piste à l'opérateur, mais aussi l'adaptation de la piste au type de conteneur porté par le véhicule autoguidé circulant sur la piste, cette double adaptation étant de plus réalisée de manière dynamique, donc potentiellement en permanence.

De préférence, après ledit ajustement ou après lesdits ajustements, à chaque changement de profondeur à laquelle l'opérateur met ou enlève un article, le procédé de gestion d'une station de préparation de commandes comprend le cycle profondeur suivant :
➢ l'adaptation dynamique, par le serveur déporté, de l'information d'ajustement de la hauteur de la piste de manière à ce que, la hauteur cumulée, à partir du sol, du conteneur porté par le véhicule autoguidé circulant sur la piste, dont est soustraite la profondeur à laquelle l'opérateur met ou enlève un article, au fur et à mesure qu'il remplit ou qu'il vide le conteneur, reste adaptée à l'opérateur,
➢ le renvoi, du serveur déporté vers la station, d'une information d'ajustement dynamiquement adaptée,
➢ l'ajustement, de la hauteur de la piste par rapport au sol, réalisé automatiquement et dynamiquement par le mécanisme interne de la station, à partir de l'information d'ajustement dynamiquement adaptée, au fur et à mesure que l'opérateur remplit ou vide le conteneur. La profondeur est la dimension selon un axe vertical. La profondeur soustraite est mesurée à partir du haut du conteneur.

Ainsi, l'adaptation à l'opérateur est encore plus raffinée dans la mesure où elle tient compte, et potentiellement en permanence, de l'état de vidage ou de remplissage du conteneur manipulé par l'opérateur, de manière à ce que même cet effort d'adaptation limité puisse être épargné à l'opérateur.

De préférence, en plus du ou des ajustements automatiques, l'opérateur peut affiner la hauteur de la piste par un ajustement manuel, en envoyant, au niveau de la station, une instruction de montée ou de descente de la hauteur de la piste au mécanisme interne lequel affine alors la hauteur de la piste de manière correspondante à l'instruction.

Ainsi, malgré tous les perfectionnements apportés au système d'adaptation automatique de la hauteur de la piste, cette hauteur n'était pas encore amenée à un niveau idéal, ou bien en cas de dysfonctionnement, cette hauteur peut encore être réglée manuellement par l'opérateur (humain) lequel est ainsi assuré d'avoir la hauteur de piste qui lui convient parfaitement, même si cette hauteur idéale ne correspond pas à celle déterminée par le système d'ajustement automatique sur la base des données relatives à l'opérateur dont il dispose.

De préférence, la course verticale totale de réglage de la hauteur de la piste est comprise : entre 100mm et 300mm, ou bien entre 150mm et 250mm.

Ainsi, cette plage de course est optimisée dans la mesure où elle permet, dans l'application envisagée, :
➢ de satisfaire presque tous les gabarits usuels d'opérateurs, humains ou robotisés,
> sans nécessiter de mécanisme interne (de la station de préparation de commandes) qui soit trop sophistiqué pour parcourir l'intégralité de cette course.

De préférence, ladite hauteur cumulée est comprise : entre 800mm et 1600mm, ou bien entre 1000mm et 1400mm.

Ainsi, cette plage de hauteur est optimisée dans la mesure où elle permet, dans l'application envisagée, :
➢ de satisfaire presque tous les gabarits usuels d'opérateurs, humains ou robotisés,
> sans nécessiter de mécanisme interne (de la station de préparation de commandes) qui soit trop sophistiqué pour parcourir l'intégralité de cette hauteur.

De préférence, en plus de la hauteur de la piste, l'information d'ajustement inclut aussi au moins une autre caractéristique ergonomique de la piste ou de la station de préparation de commandes, le mécanisme interne modifie aussi, automatiquement et le cas échéant dynamiquement, cette autre caractéristique ergonomique de manière correspondante à l'information d'ajustement.

Ainsi, le procédé de gestion profite du fait que la disposition de la piste va être modifiée, pour ajuster, non plus seulement sa hauteur mais aussi une ou plusieurs autres de ses paramètres de disposition ou de fonctionnement.

De préférence, cette autre caractéristique ergonomique est une fonction dépendante de la hauteur de la piste.

Ainsi, le procédé de gestion profite de la synergie possible entre les différents paramètres à ajuster.

De préférence, l'autre caractéristique ergonomique ou l'une des autres caractéristiques ergonomiques est une inclinaison de la piste vers l'opérateur au niveau de l'opérateur.

Ainsi, un autre paramètre intéressant, quoique notablement moins important que la hauteur de la piste, est également adapté à l'opérateur.

De préférence, l'inclinaison de la piste est comprise entre un angle de 5 degrés et un angle de 15 degrés par rapport à l'horizontale, ou bien entre un angle de 7 degrés et un angle de 11 degrés par rapport à l'horizontale, l'ouverture du conteneur étant tournée vers l'opérateur au niveau de l'opérateur.

Ainsi, cette plage de course angulaire est optimisée dans la mesure où elle permet, dans l'application envisagée, :
➢ de satisfaire presque tous les gabarits usuels d'opérateurs, humains ou robotisés,
> sans nécessiter de mécanisme interne (de la station de préparation de commandes) qui soit trop sophistiqué pour parcourir l'intégralité de cette course angulaire.

De préférence, l'autre caractéristique ergonomique ou l'une des autres caractéristiques ergonomiques appartient à la liste suivante de caractéristiques ergonomiques :
➢ la hauteur d'un scanner de la piste ou de la station de préparation de commandes,
➢ la hauteur d'un écran de la piste ou de la station de préparation de commandes,
> un paramètre d'affichage sur un écran de la piste ou de la station de préparation de commandes, notamment parmi :
   o la palette colorimétrique utilisée pour l'affichage sur un écran de la piste,
   o la langue d'affichage à un écran de la piste,
➢ le remplacement d'un type d'alerte par un autre type d'alerte, au niveau de la station de préparation de commandes :
   o par exemple le remplacement d'une alerte sonore par une alerte visuelle affichée sur un écran de la station de préparation de commandes.

Ainsi, d'autres paramètres intéressants, quoique notablement moins importants que la hauteur de la piste, sont également adaptés à l'opérateur, et pas seulement uniquement à la hauteur de l'opérateur, mais également à d'autres spécificités de l'opérateur, en particulier humain, comme son audition, sa vue ou sa langue, afin de pouvoir optimiser le poste de travail pour tout opérateur humain, en surmontant aussi bien la barrière d'un handicap physique (vue ou audition par exemple), que la barrière d'une langue maternelle différente.

De préférence, la piste de circulation de la station comprend successivement à partir du sol :
➢ une première portion immobile, en forme de première rampe de montée à pente fixe,
➢ une deuxième portion mobile comprenant :
   o une deuxième rampe de montée à pente variable, reliée par un pivot à la première rampe de montée,
   o une troisième rampe de descente vers l'opérateur, à pente fixe ou variable,
➢ le changement de la hauteur de la piste étant obtenu par le déplacement de la deuxième portion mobile.

Ainsi, cette structure en deux parties, l'une fixe d'étendue plus large et l'autre mobile d'étendue plus limitée, permet :
➢ de bien remplir les exigences techniques, permettant d'ajuster la hauteur de la piste dans la plage voulue, de manière simple et efficace,
➢ tout en limitant le coût et la complexité des parties mobiles de la piste, effectuant l'ajustement en hauteur de cette piste.

De préférence, la réponse de personnalisation comprend une information supplémentaire d'ajustement de la hauteur d'une piste supplémentaire de la station, le mécanisme interne de la station réalise également automatiquement l'ajustement, de la hauteur de la piste supplémentaire par rapport au sol, à partir de l'information supplémentaire d'ajustement.

Ainsi, plusieurs pistes distinctes entre elles, et même éventuellement différentes entre elles, peuvent être gérées par le procédé de gestion et par le même système de gestion mettant en œuvre le procédé de gestion.

De préférence, soit la hauteur de la piste contenue dans l'information d'ajustement est identique à la hauteur de la piste supplémentaire contenue dans l'information supplémentaire d'ajustement, soit la hauteur de la piste contenue dans l'information d'ajustement est différente de la hauteur de la piste supplémentaire contenue dans l'information supplémentaire d'ajustement.

Ainsi, un ajustement encore plus affiné, distinct entre les différents types de pistes, peut être réalisé.

De préférence :
➢ la piste de la station est une piste de circulation de conteneurs portés par des véhicules autoguidés, les conteneurs :
   o arrivant vides auprès de l'opérateur qui les remplit avec des articles,
   o et repartant remplis en quittant l'opérateur,
➢ la piste supplémentaire de la station est une piste de circulation de conteneurs portés par des véhicules autoguidés, les conteneurs :
   o arrivant pleins auprès de l'opérateur qui les vide de leurs articles,
   o et repartant vides en quittant l'opérateur.

Ainsi, la piste de passage des conteneurs vides à remplir, tout comme la piste de passage des conteneurs pleins à vider, les conteneurs pleins de stockage de produits étant vidés dans les conteneurs de commande à destination des clients extérieurs au système de stockage globalement géré par le procédé de gestion selon l'invention ou selon un mode de réalisation de l'invention.

De préférence, le mécanisme interne de la station comprend un ou plusieurs vérins, de préférence deux vérins, situés sous la piste ou sous les pistes, de manière à pouvoir soulever ou abaisser la piste ou les pistes.

Ainsi, la structure du mécanisme interne de la station est à la fois simple et efficace pour ajuster la hauteur de la piste, tout en restant robuste, car cet ajustement a lieu souvent plusieurs fois par jour (à chaque changement d'opérateur), et même parfois, plusieurs fois par heure (à chaque changement de type de conteneur, à certains moments).

De préférence le cycle comprend, avant l'envoi de la requête de personnalisation : la connexion de l'opérateur à sa station, par l'intermédiaire de son identifiant.

Ainsi, le procédé de gestion utilise une façon simple de reconnaître l'opérateur pour pouvoir ajuster à cet opérateur reconnu, la hauteur de la piste dans la station de préparation de commandes, cette identification étant souvent d'ailleurs déjà faite par l'opérateur pour d'autres raisons, par exemple la durée de pointage au poste de travail. Dans ce dernier cas, il s'agit, pour le procédé de gestion, de tirer parti d'une tâche déjà réalisée par l'opérateur, sans demander à l'opérateur de réaliser la moindre tâche supplémentaire.

De préférence, l'identifiant de l'opérateur est :
o soit sous la forme d'un code barre devant être lu par un scanner de la station de préparation de commandes,
o soit sous la forme d'une reconnaissance faciale de l'opérateur devant être vu par une caméra de la station de préparation de commandes.

Ainsi, la technique d'identification de l'opérateur est à la fois simple et efficace.

De préférence, la station de préparation de commandes appartient à un groupe de stations de préparation de commandes d'un entrepôt, et :
➢ le serveur déporté comprend :
   ∘ un premier sous-serveur,
      ▪ dédié au personnel de l'entrepôt,
      ▪ gérant l'information d'ajustement,
   o un deuxième sous-serveur,
      ▪ dédié à la gestion des flux de conteneurs à l'intérieur de l'entrepôt,
         - de conteneurs vides,
         - et/ou de conteneurs remplis d'articles identiques en provenance d'une zone de stockage d'articles dans l'entrepôt,
         - et/ou de conteneurs remplis d'articles identiques ou différents à destination d'une zone de stockage de commandes ou d'une zone d'expédition de commandes,
      ▪ gérant l'information d'ajustement dynamiquement adaptée.

Ainsi, la structure simple du serveur de gestion associé au procédé de gestion, permet de réaliser de manière efficace les tâches du procédé de gestion.

Préférentiellement, la station d'intervention d'un convoyeur pour le traitement de commandes contenues dans des conteneurs, comprend une piste de convoyage configurée pour acheminer les conteneurs, la piste de convoyage comprenant une portion d'intervention, adjacente et en hauteur par rapport à une zone d'intervention Z sur laquelle est positionné un opérateur, ladite portion d'intervention étant configurée pour que l'opérateur puisse réaliser des opérations sur les conteneurs acheminés par la piste de convoyage, la piste de convoyage comprenant une partie fixe et une partie mobile, la partie mobile comprenant la portion d'intervention, la station d'intervention comprenant en outre un mécanisme interne de réglage de la piste de convoyage configuré pour régler une hauteur de la portion d'intervention, ladite hauteur étant mesurée par rapport à une hauteur de référence de la zone d'intervention de l'opérateur, en mettant en mouvement la partie mobile de la piste de convoyage par rapport à la partie fixe.

Préférentiellement, la station d'intervention selon la présente divulgation présente une portion d'intervention ajustable en hauteur, typiquement selon une direction verticale, faisant partie de la piste de convoyage. Cette configuration améliore l'ergonomie et l'efficacité de l'opérateur en permettant un accès optimal aux conteneurs, réduisant ainsi la fatigue et augmentant la productivité. Cela permet également une adaptation rapide et précise de la hauteur de travail en fonction des besoins spécifiques de l'opérateur ou des caractéristiques des conteneurs, ce qui améliore la flexibilité et l'adaptabilité de la station d'intervention.

Une telle solution permet, le cas échéant, de s'affranchir de plateformes d'élévation additionnelles, et donc de supprimer le risque de chutes qu'engendrent de telles plateformes. L'encombrement et le coût liés à ces plateformes sont également supprimés.

En outre, la présence d'une partie mobile intégrant la portion d'intervention sur laquelle les conteneurs sont acheminés permet de maintenir une continuité dans le flux de convoyage pendant le réglage de la hauteur de travail. Cela permet d'atteindre des cadences élevées de traitement des commandes, optimisant ainsi le rendement global du système de convoyage.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

**[****Fig. 1****]** montre une représentation schématique d'un convoyeur et d'une zone d'intervention au sol, selon un exemple,
**[****Fig. 2****]** montre une vue de dessus du convoyeur de la figure 1, sur laquelle on peut voir différentes tailles de conteneurs en cours d'acheminement et un opérateur se tenant dans la zone d'intervention, prêt à intervenir sur les conteneurs,
**[****Fig. 3****]** montre de façon non exhaustive, sur deux vues 3A et 3B, deux exemples de piste de convoyage,
**[****Fig. 4****]** montre une représentation schématique d'un premier exemple de station d'intervention selon la présente divulgation,
**[****Fig. 5****]** montre une représentation schématique vue de dessus d'un deuxième exemple de station d'intervention selon la présente divulgation, sur lequel la partie mobile de la piste de convoyage constitue une extrémité de la piste de convoyage,
**[****Fig. 6****]** montre une représentation schématique vue de côté de l'exemple de station d'intervention de la figure 6,
**[****Fig. 7****]** montre une représentation schématique vue de dessus d'un exemple particulier de station d'intervention comprenant deux pistes de convoyages,
**[****Fig. 8****]** montre une représentation en perspective d'un exemple particulier de station d'intervention,
**[****Fig. 9****]** montre une vue de côté de l'exemple de la figure 8,
**[****Fig. 10****]** montre une vue en coupe transversale d'un exemple particulier comprenant deux vérins, particulièrement visibles.
**[****Fig. 11****]** La figure 11 représente schématiquement le déroulement d'un exemple de procédé de gestion d'une station de préparation de commandes selon un mode de réalisation de l'invention.

### DESCRIPTION DETAILLEE DES MODES DE REALISATION DE L'INVENTION

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un véhicule de transport automatique dans sa position normale d'utilisation. Par ailleurs, le terme « sensiblement » est à interprété comme indiquant que le résultat obtenu l'est de façon aussi précise que la méthode connue pour le mesurer.

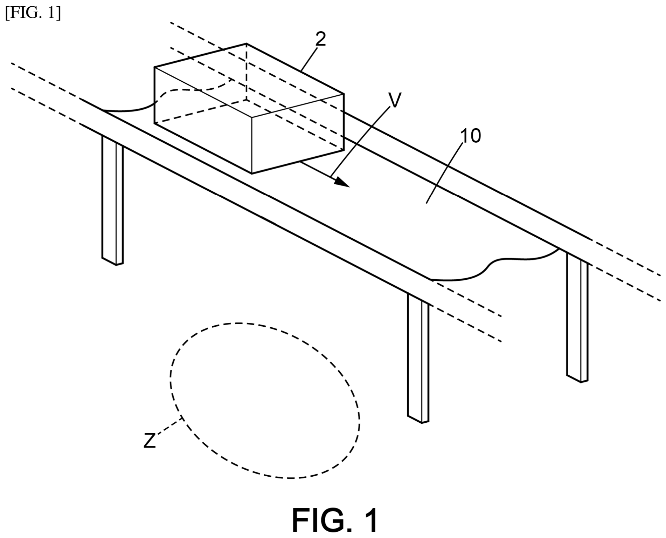

Il est maintenant fait référence à la figure 1, qui montre une station d'intervention 1 d'un convoyeur. Une telle station d'intervention 1 est notamment prévue pour le traitement de commandes contenues dans des conteneurs 2, acheminés sur la station d'intervention 1.

De tels traitements peuvent inclure typiquement des préparations de commande mais également des opérations de contrôle, de chargement, de déchargement, etc. Les préparations de commande sont réalisées à partir d'articles arrivant dans des conteneurs de produits pour être transbordés dans des conteneurs de commande, les conteneurs de produits et les conteneurs de commande pouvant être eux-mêmes portés ou contenus dans des conteneurs de stockage portés par des véhicules automatiques de transport ou véhicules autoguidés.

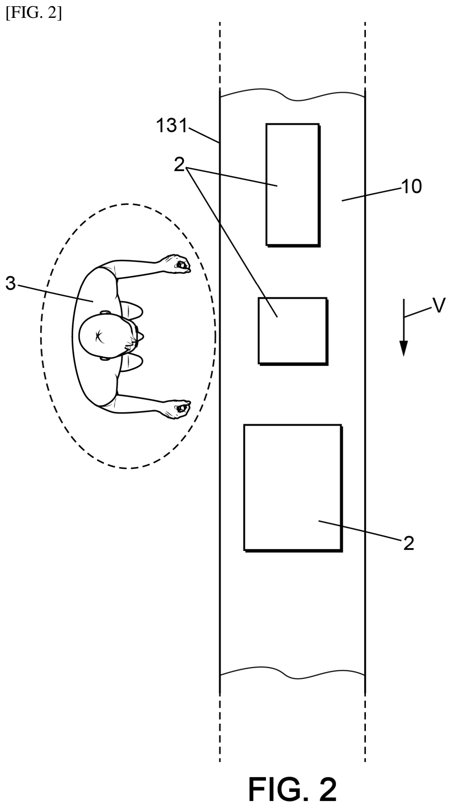

Les conteneurs 2 peuvent être de tailles variées et de poids différents. On peut voir notamment en figure 2 que des conteneurs 2 de tailles différentes peuvent être acheminés sur la station d'intervention 1.

La station d'intervention 1 comprend une piste de convoyage 10 configurée pour acheminer les conteneurs 2, typiquement d'une autre portion de convoyeur située en amont de la station d'intervention 1.

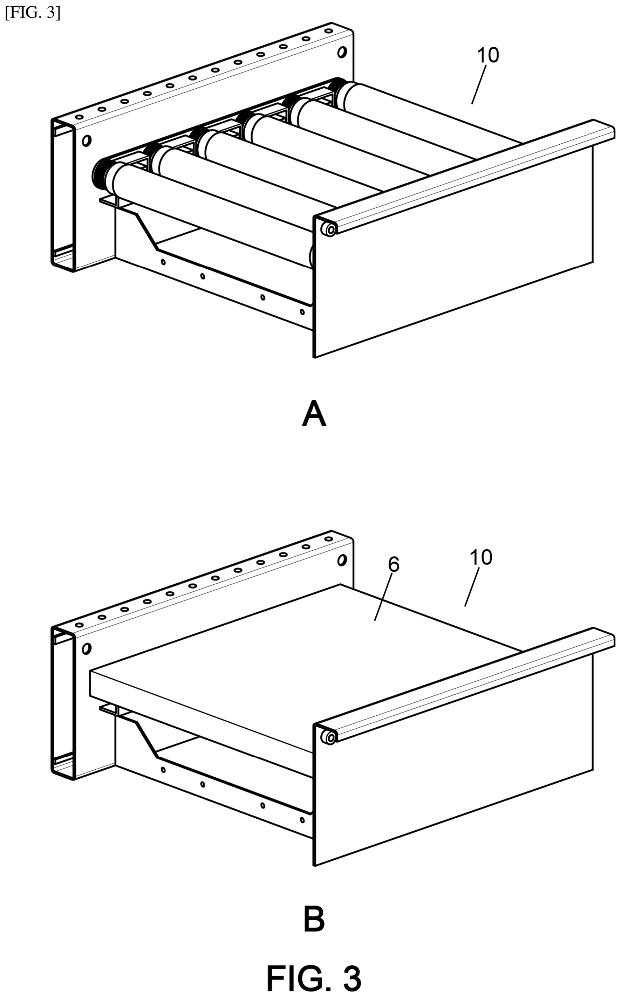

Il est entendu par « configurée pour acheminer », que la piste de convoyage 10 peut, selon un premier exemple notamment illustré en figure 3a, comprendre des organes mobiles telles que des rouleaux pour mettre en mouvement les conteneurs 2. Selon un exemple de réalisation connu, au moins un des rouleaux peut être motorisé, et transmettre aux autres rouleaux le couple de rotation via des courroies de transmission.

Selon un autre exemple, notamment illustré en figure 3b, la piste de convoyage 10 comprend une allée 6, formant une surface sensiblement plane sur laquelle les conteneurs 2 peuvent rouler. Une telle solution peut notamment être adaptée pour l'acheminement de conteneurs 2 par des véhicules automatiques 7 motorisés (« Automated Guided Vehicle » en langue anglaise, ou communément appelés AGV).

La station d'intervention 1 est en outre prévue au niveau d'une zone d'intervention Z dans laquelle un opérateur peut se tenir en vue d'intervenir sur la station d'intervention.

L'opérateur peut typiquement être un opérateur humain, mais il peut s'agir également d'un robot ou d'une installation robotisée.

La station d'intervention peut être posée sur le sol, et la zone d'intervention Z peut être une zone au sol.

Dans un autre exemple (non représenté), la zone d'intervention Z peut être une zone prévue sur une plateforme, distincte du sol. Par exemple, il peut s'agir d'une plateforme surélevée par rapport au sol.

De manière générale, la zone d'intervention Z, au sol ou sur une plateforme, permet à l'opérateur de se tenir à une hauteur H0 dite « de référence ».

La piste de convoyage 10 comprend en outre une portion d'intervention 13, adjacente et positionnée en hauteur par rapport à la zone d'intervention Z.

Il est ici entendu par « adjacente », que la portion d'intervention 13 peut par exemple être définie comme une portion de la station d'intervention 1 qui comporte un bord d'intervention 131 à proximité de la zone d'intervention Z de l'opérateur. De cette façon, ladite portion d'intervention 13 est configurée pour que l'opérateur 3 puisse réaliser des opérations sur les conteneurs 2 acheminés par la piste de convoyage 10 depuis la zone d'intervention Z. Typiquement, l'opérateur peut être amené à se tenir d'un côté dudit bord d'intervention 131, et à réaliser une opération sur un conteneur 2 situé de l'autre côté dudit bord d'intervention 131.

Une telle portion d'intervention 13 est « en hauteur » par rapport à la zone d'intervention Z, en ce qu'elle comporte une hauteur H mesurée par rapport à la hauteur de référence H0 de la zone d'intervention Z. Typiquement, la hauteur H est supérieure à la hauteur H0 , de sorte que la portion d'intervention 13 est surélevée par rapport à la zone d'intervention Z, ce qui rend la portion d'intervention 13 aisément accessible par l'opérateur. Selon un exemple particulier, la hauteur H de la portion d'intervention 13 peut évoluer au voisinage d'une hauteur ergonomique pour l'opérateur.

Typiquement, la hauteur de la portion d'intervention 13 est la hauteur H par rapport à la zone d'intervention Z, la hauteur H est typiquement mesurée au niveau dudit bord d'intervention 131. Par exemple, la hauteur H0 de référence de la zone d'intervention Z peut être égale à zéro, et la hauteur H peut par exemple être comprise entre 65 et 110 cm, pour optimiser l'ergonomie du poste. Dans d'autres cas, si la zone d'intervention Z n'est pas sur le sol, et est située par exemple sur une plateforme, la hauteur de référence H0 pourra être la hauteur de ladite plateforme, et la hauteur H de la portion d'intervention 13 pourra être comprise entre 65 et 110 cm en addition de la hauteur H0 de la zone d'intervention Z.

La station d'intervention 1 peut comprendre un bâti 100, par exemple fixé au sol, sur lequel est montée la piste de convoyage 10.

La piste de convoyage 10 comprend en outre une partie fixe 15 et une partie mobile 14. La partie fixe 15 de la piste de convoyage 10 est une portion de la piste de convoyage solidaire du bâti 100. La partie mobile 14 est alors mobile par rapport à la partie fixe 15.

De manière générale, la partie fixe 15 de la piste de convoyage peut s'étendre sensiblement horizontalement, au moins au voisinage de la jonction avec la partie mobile 14.

La partie mobile 14 de la station d'intervention 1 comprend en outre la portion d'intervention 13. Ainsi, le bord d'intervention 131 de la portion d'intervention 13 est mobile avec la partie mobile 14 de la piste de convoyage 10.

Selon la présente divulgation, la station d'intervention 1 comprend un mécanisme interne de réglage 4 de la piste de convoyage 10 configuré pour mettre en mouvement la partie mobile 14 par rapport à la partie fixe 15, de sorte à régler une hauteur de la portion d'intervention 13 portée par la partie mobile 14.

Par « mécanisme interne », on entend un mécanisme qui fait partie intégrante de la station d'intervention 1, et qui est donc physiquement et structurellement lié à d'autres éléments de ladite station. Plus précisément, le mécanisme interne de réglage 4, tel que décrit dans la présente divulgation, est configuré pour autoriser un guidage en hauteur de la partie mobile 14 de la piste de convoyage 10, qui sert à transporter les conteneurs 2, et par rapport à la partie fixe, voire de préférence configuré pour actionner en hauteur la partie mobile. Cette configuration garantit que l'ajustement de la partie mobile est réalisé directement par un guidage interne à la station, et de préférence par un actionnement interne à la station, et ainsi de préférence sans intervention de composants externes pour l'actionnement en hauteur. De cette façon, grâce au mécanisme interne de réglage 4, il est possible de régler une hauteur H de la portion d'intervention 13 par rapport à la hauteur H0 de la zone d'intervention Z de l'opérateur en mettant en mouvement la partie mobile 14 de la piste de convoyage 10 par rapport à la partie fixe 15.

En particulier, la portion d'intervention 13 est mise en mouvement et se déplace d'une hauteur ΔH pour faire varier sa hauteur H. Comme décrit précédemment, les valeurs de hauteur sont mesurées par rapport à une hauteur de référence H0 de la zone d'intervention Z.

La variation de hauteur ΔH permise par le mécanisme de réglage peut être positive ou négative. Ainsi, il est possible de surélever, ou d'abaisser la portion d'intervention 13, notamment dans un but d'amélioration de l'ergonomie de la station d'intervention 1.

De manière générale, la piste de convoyage 10 peut présenter une direction générale V selon laquelle les conteneurs 2 progressent. Une telle direction générale V correspond typiquement à une direction d'élongation de la piste de convoyage.

Selon un exemple particulier, la portion mobile 14 de la piste de convoyage 10 est reliée à la partie fixe 15, ou au bâti 100, de façon rotative par une articulation 5 présentant un axe de rotation s'étendant transversalement à la direction V. Le réglage de la hauteur H de la portion d'intervention 13 étant alors réalisé par rotation de la partie mobile 14 par rapport à la partie fixe 15 autour de ladite articulation 5.

Autrement dit, l'axe de rotation de l'articulation 5 peut être sensiblement perpendiculaire à la direction d'élongation de la piste de convoyage 10, typiquement horizontal.

Typiquement, la partie mobile 14 comprend un bord proximal, au voisinage de la partie fixe 15, qu'il est avantageux de maintenir à la même hauteur que la partie fixe 15, de sorte que l'acheminement des conteneurs 2 se passe sans obstacle. Ainsi, l'articulation 5, de préférence positionnée au niveau de ce bord proximal, permet de faire varier la hauteur de la portion d'intervention 13 par rotation.

En particulier, la partie mobile 14 de la piste de convoyage 10 peut s'étendre en longueur suivant la direction générale V à partir de ladite articulation 5 jusqu'à une extrémité distale 101, la portion d'intervention 13 étant adjacente à ladite extrémité distale 101. Un bras de levier est ainsi formé, de sorte que la hauteur de la partie mobile 14, au niveau de l'articulation 5, reste inchangée, alors qu'elle varie au niveau de la portion d'intervention 13 située à une extrémité distale 101 de la partie mobile 14.

En conséquence, le réglage de la hauteur de la portion d'intervention 13 conduit à une variation d'inclinaison de la partie mobile 14 : une pente se forme en aval de l'articulation 5. De sorte à minimiser la variation d'inclinaison, pour minimiser l'impact sur l'acheminement des conteneurs 2 qui franchissent l'articulation 5, la distance L entre la portion d'intervention 13 et l'axe de l'articulation 5 pourra être dimensionné pour être relativement grande. Par exemple une telle distance L pourra être supérieure à 1 mètre, voire supérieure à 1,5m, voire supérieure à 2 mètres.

Notamment, une telle distance L pourra être mesurée entre l'axe de l'articulation, et un bord de la portion d'intervention 13 le plus proche dudit axe de l'articulation 5, un tel bord pourra être défini comme étant distant du bord d'intervention 131 d'une distance égale à la dimension du plus grand conteneur étant destiné à être acheminé sur la portion d'intervention 13.

Selon un autre exemple, une telle distance pourra être mesuré entre le bord d'intervention 131 et l'axe de l'articulation.

Avantageusement, la variation d'inclinaison Δθ (ou autrement appelée « course angulaire ») peut être comprise entre -5° et +5° par rapport à l'horizontale. Autrement dit, il pourra être avantageux qu'une distance entre la portion d'intervention 13 et l'axe de l'articulation 5 soit supérieure à 1 mètre, voire supérieure à 1,5 mm, voire supérieure à 2 mètres, voire supérieure à 2,5 mètres pour ainsi obtenir une course de réglage en hauteur de la portion d'intervention 13 suivant la direction verticale au moins égale à plus ou moins 100 mm (±100mm) par rapport à une position nominale de la portion d'intervention, correspondante à une course angulaire de la partie mobile autour de l'axe d'articulation inférieure ou égale à plus ou moins 5°, et de préférence à plus ou moins 4°, par exemple plus ou moins 2°, à savoir une course angulaire limitée.

Selon une réalisation, et pour une position nominale de la portion d'intervention 13 correspondant à un angle d'inclinaison nominal de la portion d'intervention 13 qui peut être de 9° (à ±3°) vers la zone d'intervention, une variation de la course angulaire de la portion mobile 14 autour de l'angle d'inclinaison nominal entraine une course de réglage verticale de la portion d'intervention au moins égale à plus ou moins 100mm (±100mm) autour de la hauteur de la portion d'intervention 13 lorsque dans son inclinaison nominale.

Par exemple la distance entre la portion d'intervention 13 et l'axe de l'articulation 5 peut être de 3 mètres et l'angle d'inclinaison nominal de la portion d'intervention 13 est de 9°. Une variation de plus 2° au-dessus de la position nominale engendre une élévation positive de plus 104 mm et une élévation négative en dessous de la position nominale engendre une élévation négative de moins 104 mm.

La variation d'inclinaison Δθ de la partie mobile 14 est donc une conséquence du réglage en hauteur de la portion d'intervention, qu'il peut être souhaitable d'atténuer.

En particulier, la piste de convoyage 10 de la station d'intervention 1 peut comprendre une première portion d'acheminement 11 et une deuxième portion d'acheminement 12 reliées l'une à l'autre par la portion d'intervention 13. Dans ce cas, la portion d'intervention 13 constitue un segment d'un trajet des conteneurs 2, compris entre deux portions de la piste de convoyage 10, par lequel les conteneurs 2 « passent ». La piste de convoyage 10 est alors configurée pour acheminer les conteneurs 2 par la première portion d'acheminement 11 jusqu'à la deuxième portion d'acheminement 12 en passant par la portion d'intervention 13.

Selon des exemples, il peut être prévu que les véhicules automatisés et/ou la piste de convoyage 10 soient configurés pour stopper temporairement l'acheminement des conteneurs 2 au niveau de la portion d'intervention 13, le temps que l'opérateur réalise l'opération souhaitée.

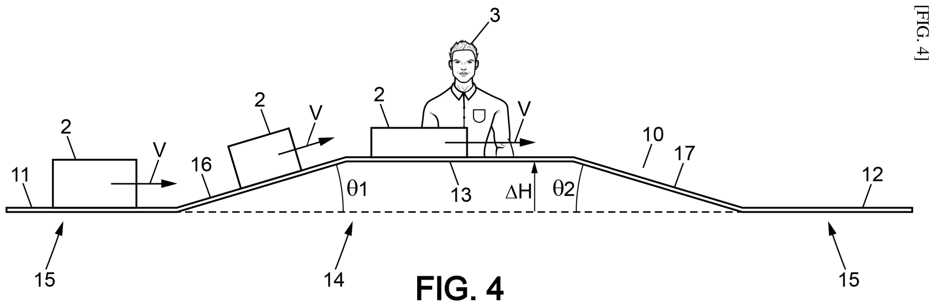

Un exemple particulier de station d'intervention 1 est illustré en figure 4.

Dans cet exemple, la portion d'intervention 13 est comprise entre une première portion d'acheminement 11 et une deuxième portion d'acheminement 12.

Des conteneurs 2 sont acheminés de la première portion d'acheminement 11 jusqu'à la deuxième portion d'acheminement 12 en passant par la portion d'intervention 13. De ce fait, les conteneurs sont acheminés selon une direction principale V.

Le mécanisme interne de réglage 4 (non représenté dans cet exemple) peut typiquement comporter des vérins, dont une extrémité est liée au bâti 100 fixe, et une autre extrémité mobile est liée à la partie mobile 14. Le mécanisme de réglage 4 est configuré pour régler une hauteur H de la portion d'intervention 13 en la faisant varier d'une hauteur ΔH.

Dans cet exemple, le déplacement en hauteur ΔH de la portion d'intervention 13 réalise une variation d'inclinaison de la piste de convoyage 10, notamment en créant une première pente 16 d'une première inclinaison θ1, et une deuxième pente 17 d'une deuxième inclinaison θ2 opposée à la première inclinaison.

Selon l'exemple représenté, la première pente 16 est montante et une deuxième pente 17 descendante. Bien entendu, selon la valeur de variation de hauteur ΔH, qui peut également être négative, le première pente 16 peut être descendante et la deuxième pente 17 être montante.

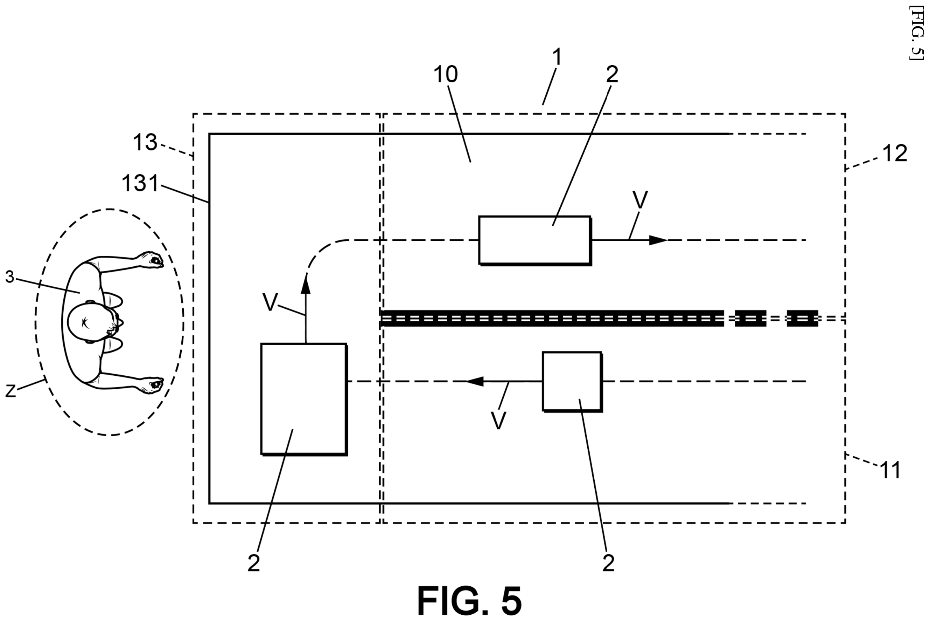

Un autre exemple de station d'intervention 1 est représenté en figure 5.

Dans cet exemple, la première portion d'acheminement 11 et la deuxième portion d'acheminement 12 s'étendent l'une à côté de l'autre, toutes deux d'un même côté de la portion d'intervention 13. De cette façon, la portion d'intervention 13 réalise une extrémité de la piste de convoyage 10, de sorte que les conteneurs 2 sont acheminés, avant l'intervention de l'opérateur, dans un premier sens de circulation en allant en se rapprochant de la portion d'intervention 13, puis vers un second sens de circulation opposé au premier sens de circulation en allant en s'éloignant de la portion d'intervention 13 après l'intervention de l'opérateur.

Selon un exemple particulier, et notamment tel que représenté, la piste de convoyage peut former un « U », la première portion d'acheminement 11 et la deuxième portion d'acheminement 12 étant distinctes l'une de l'autre.

Selon des exemples, la première portion d'acheminement 11 peut être une portion de la piste de convoyage par laquelle les conteneurs 2 passent pour atteindre la portion d'intervention 13, et la deuxième portion d'acheminement 12 peut être une portion de la piste de convoyage 10 par laquelle les conteneurs 2 passent lorsqu'ils quittent la portion d'intervention 13.

Par ailleurs, il est possible que la première portion d'acheminement 11 et la deuxième portion d'acheminement 12 soient confondues et que les conteneurs 2 atteignent la portion d'intervention 13 et la quittent par le même trajet.

De manière générale, la piste de convoyage 10 présente une direction générale V, qui définit la direction selon laquelle les conteneurs 2 progressent. Sur l'exemple particulier de la figure 5, la direction V correspond typiquement à la direction générale d'étendue de la piste de convoyage 10, selon laquelle les conteneurs 2 progressent jusqu'à la portion d'intervention 13 et selon laquelle ils en repartent.

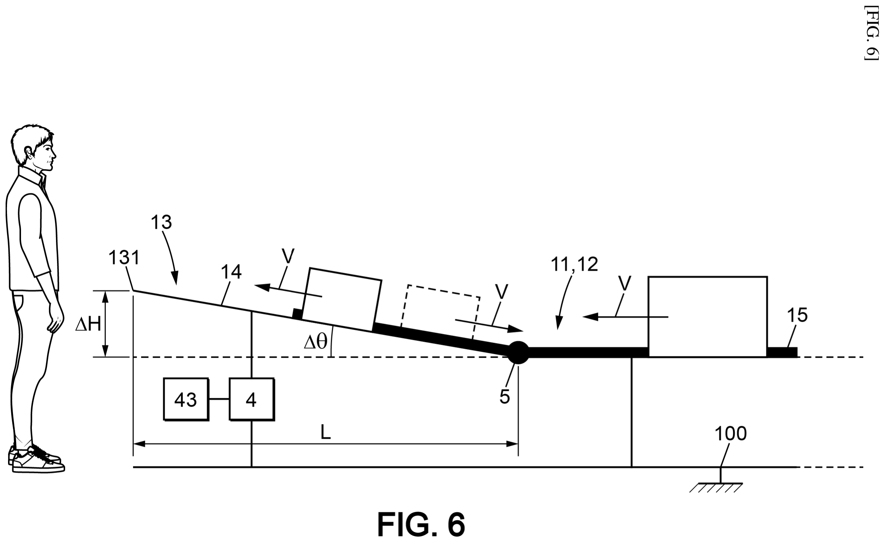

Selon un exemple particulier, et notamment tel que représenté en figure 6, la portion mobile 14 de la piste de convoyage 10 est reliée à la partie fixe 15 de façon rotative par une articulation 5 s'étendant transversalement à la direction V.

En effet l'articulation 5 permet une rotation de la partie mobile 14 par rapport à la partie fixe 15 selon un axe qui coupe transversalement la direction V.

Préférentiellement, l'axe de l'articulation 5 est sensiblement perpendiculaire à la direction générale V.

Selon cet exemple, l'articulation 5 est telle qu'un réglage de la hauteur H de la portion d'intervention 13 induit une variation de l'inclinaison Δθ de la direction d'avance V de la piste de convoyage 10 au niveau de la partie mobile 14. La variation d'inclinaison de la direction d'avance V peut typiquement être réalisée dans un plan vertical, tel que représenté sur l'exemple de la figure 6.

De cette façon, il est possible de procéder au réglage de la hauteur de la portion d'intervention 13, et donc de faire varier sa hauteur d'une valeur ΔH pendant que des conteneurs 2 progressent depuis la partie fixe 15 jusqu'à la partie mobile 14. La création d'une pente, en conséquence d'une variation de la hauteur de la portion d'intervention 13, peut en effet permettre de ne pas interrompre le flux de conteneurs 2 pendant le réglage.

Une telle variation d'inclinaison Δθ de la direction V correspond à une variation d'inclinaison de la partie mobile 14.

A cette fin, la station d'intervention 1 peut comprendre un actionneur 43, configuré pour faire varier la hauteur H de la partie mobile, typiquement en inclinant la partie mobile 14 par rapport à la partie fixe 15.

L'actionneur 43 peut à cet effet comprendre une première extrémité 431 montée pivotante sur la partie fixe 15 de la piste de convoyage 10, et une deuxième extrémité 432 montée pivotante sur la partie mobile 14 de la piste de convoyage 10, de sorte qu'un allongement ou une rétractation de l'actionneur permette de régler la hauteur de la portion d'intervention 13.

En particulier, il est ici entendu par « montée sur la partie fixe », que la première extrémité 431 de l'actionneur 43 est montée sur une partie solidaire de la partie fixe 15, par exemple le bâti 100, ou encore directement sur le sol sur lequel la partie fixe 15 est montée.

Selon un exemple particulier, la partie mobile 14 de la piste de convoyage 10 s'étend en longueur suivant la direction générale V à partir de ladite articulation 5, et se termine par une extrémité distale 101 adjacente à la portion d'intervention 13, de sorte que la zone d'intervention est adjacente à ladite extrémité distale 101 de la partie mobile 14.

Typiquement, ladite extrémité distale 101 comprend un bord d'intervention 131 de la portion d'intervention 13. Un tel bord d'intervention 131 séparant la zone d'intervention Z dans laquelle un opérateur est situé de la portion d'intervention 13 au niveau de laquelle les conteneurs 2 sont acheminés. En pratique, selon un exemple, l'opérateur se tient d'un premier côté du bord d'intervention 131 au niveau de la zone d'intervention Z, et atteint les conteneurs 2 d'un deuxième côté du bord d'intervention 131.

En particulier, la partie mobile 14 de la piste de convoyage 10 s'étend en longueur selon la direction générale V sur une distance L pouvant être supérieure à 1 mètre, préférentiellement supérieure à 2 mètres.

En effet, il peut être avantageux que ladite distance L, qui sépare l'extrémité distale 101 de l'articulation 5, soit relativement importante. Selon la grandeur de la variation de hauteur souhaitée, et pour une même variation de hauteur ΔH, la variation d'inclinaison Δθ est moins importante si la distance L est grande. De cette façon, la pente formée par l'articulation 5 ne gêne pas l'acheminement des conteneurs 2.

De manière générale, le réglage en hauteur de la portion d'intervention 13 est tel que la variation de hauteur ΔH, mesurée par rapport à la hauteur de référence de la zone d'intervention Z de l'opérateur, est la plus importante au niveau du bord d'intervention 131 de la portion d'intervention 13.

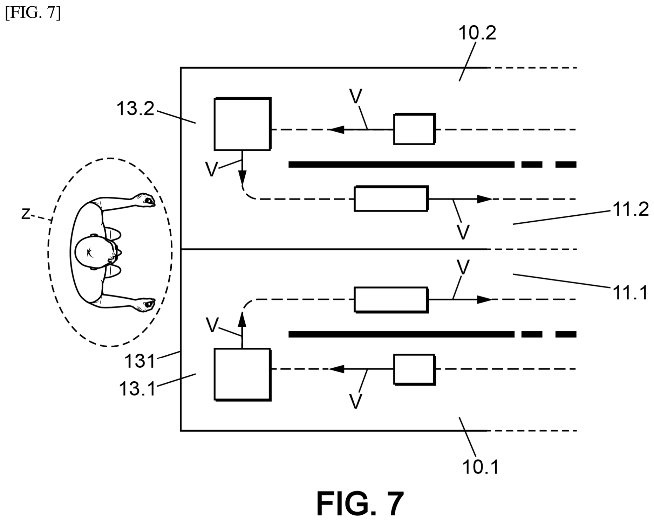

Selon un exemple particulier représenté en figure 7, la station d'intervention 1 comprend une première piste de convoyage 10.1 et une deuxième piste de convoyage 10.2 s'étendant l'une à côté de l'autre, de sorte qu'une première portion d'intervention 13.1 de la première piste de convoyage 10.1 est positionnée à côté d'une deuxième portion d'intervention 13.2 de la deuxième piste de convoyage 11.2.

Dans ce cas, le mécanisme interne 4 de réglage est configuré pour régler la hauteur de chacune des portions d'intervention 13.1, 13.2 de la première et de la deuxième piste de convoyage 10.1, 10.2.

Avantageusement, il est possible que le réglage de la première portion d'intervention 13.1 et de la deuxième portion d'intervention 13.2 soient indépendants l'un de l'autre. A cette fin, le mécanisme interne 4 peut comprendre au moins deux actionneurs, dont un premier actionneur est lié à la première piste de convoyage 10.1, et un deuxième actionneur est lié à la deuxième piste de convoyage 10.2, de sorte que la hauteur des deux portions d'interventions 13.1, 13.2 est réglable de façon indépendante l'une de l'autre.

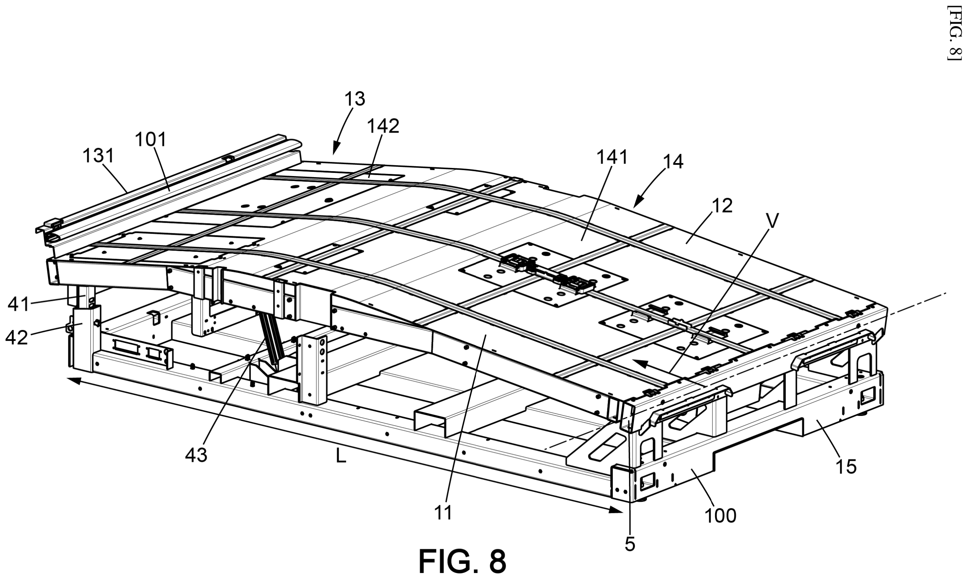

Un exemple particulier de station d'intervention 1 illustré sur les figures 8 à 10 va maintenant être décrit.

Sur ces figures, la partie mobile 14 de la piste de convoyage 10 est particulièrement visible, la partie fixe 15 n'étant pas représentée. La partie mobile 14 est mobile par rapport au bâti 100 sur lequel la partie fixe 15 est montée.

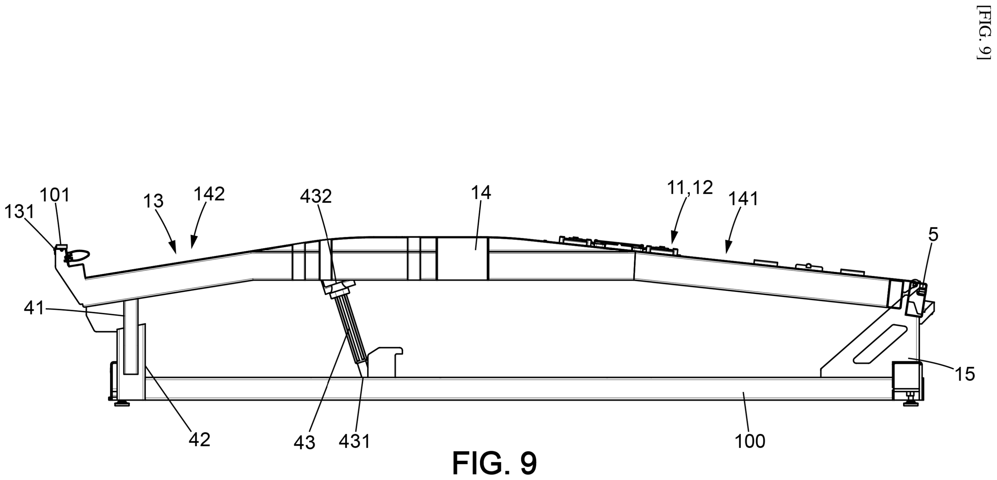

Selon cet exemple, et notamment en référence à la figure 9, la partie mobile 14 comprend une première portion de piste 141 inclinée de sorte qu'elle est montante lorsque l'on s'approche de l'extrémité distale 101, et la portion d'intervention 13 forme une deuxième portion de piste 142 inclinée selon une pente opposée par rapport à la première portion de piste 141. En effet, la deuxième portion 142 est descendante en direction de l'extrémité distale 101. De cette façon, la station d'intervention est configurée pour incliner, vers la zone d'intervention Z, un conteneur 2 acheminé sur la portion d'intervention 13.

Il est entendu par « incliner vers la zone d'intervention » que la portion d'intervention 13 comprend un point bas situé au niveau du bord d'intervention 131, au voisinage de la zone d'intervention Z de l'opérateur.

De cette façon, si un conteneur 2 est ouvert sur le dessus, un fond du conteneur 2 est plus facilement accessible grâce à cette inclinaison.

En outre, selon un exemple, et notamment tel que représenté en figures 8 à 10, le mécanisme de réglage 4 peut comprendre des moyens de réglage manuel de la hauteur de la portion d'intervention 13.

Notamment, la station d'intervention 1 peut comprendre une pièce crantée 41 montée à distance, selon la direction générale V, de l'articulation 5 sur l'une de la partie fixe 15 ou de la partie mobile 14 de la piste de convoyage 10, et une pièce complémentaire 42 montée sur l'autre de la partie fixe 15 ou de la partie mobile 14 de la piste de convoyage 10, la pièce crantée 41 comprenant une pluralité de crans correspondant à plusieurs valeurs de hauteur de la portion d'intervention 13 de la piste de convoyage 10, un cran de la pièce crantée 41 étant configuré pour coopérer avec la pièce complémentaire 42 pour régler manuellement la portion d'intervention 13 à une hauteur choisie.

De cette façon, il est possible pour un opérateur, par exemple à l'aide d'un cric, de surélever l'extrémité distale 101 de la partie mobile 14 jusqu'à une hauteur souhaitée, et de faire coopérer un cran de la pièce crantée 41 avec la pièce complémentaire 42 pour régler manuellement la hauteur de la portion d'intervention 13 à la hauteur souhaitée.

Selon des exemples, le mécanisme interne de réglage 4 peut en outre comprendre des moyens de réglage automatique de la hauteur de la portion d'intervention 13.

En effet, la station d'intervention 1 peut comprendre un actionneur 43 dont une première extrémité 431 est montée pivotante sur la partie fixe 15 de la piste de convoyage 10, ou directement fixée au bâti 100, et dont une deuxième extrémité 432 est montée pivotante sur la partie mobile 14 de sorte qu'un allongement ou une rétractation de l'actionneur permet de régler la hauteur de la portion d'intervention 13.

En effet, la portion d'intervention 13 est typiquement localisée au voisinage de la partie distale 101 de la partie mobile 14, de sorte qu'une rotation au niveau de l'articulation 5 de la partie mobile 14 par rapport à la partie fixe 15 engendre une variation de hauteur ΔH au niveau de la portion d'intervention 13.

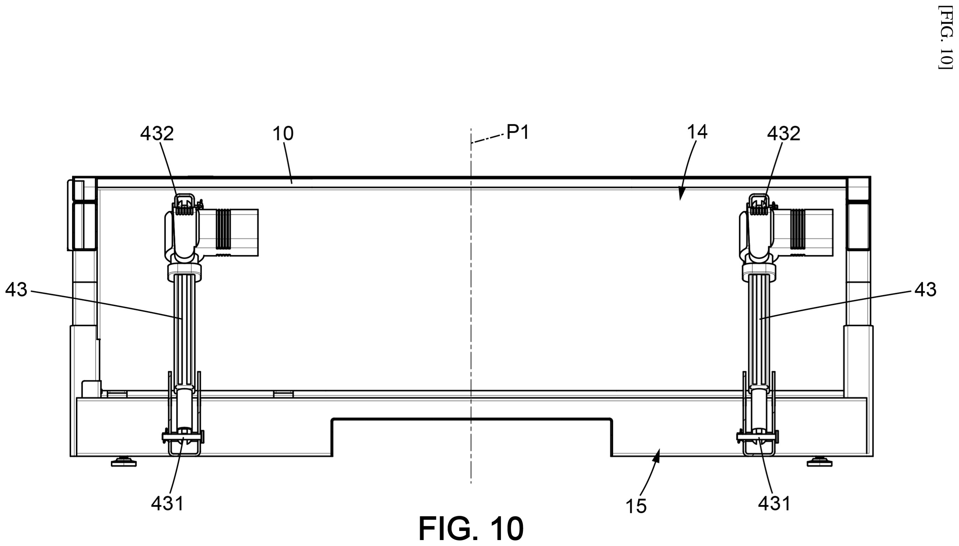

Selon un exemple particulier, et notamment tel que représenté en figure 10, le mécanisme interne 4 de réglage comprend deux vérins positionnés chacun de part et d'autre d'un plan médian longitudinal P1 de la piste de convoyage 10. De manière préférentielle, les deux vérins sont positionnés à égale distance dudit plan médian P1, de sorte que les efforts mécaniques sont équilibrés entre les deux vérins.

En outre, la station d'intervention 1 peut comprendre une interface homme-machine (non représentée) reliée typiquement à un processeur et à une mémoire et via laquelle un opérateur peut transmettre une commande, pour soit :
> régler la hauteur de la portion d'intervention 13 à une valeur de hauteur disponible dans la mémoire, ou
➢ augmenter ou diminuer la hauteur de la portion d'intervention 13 jusqu'à une valeur de hauteur choisie.

La présente divulgation concerne en outre un procédé de préparation de commande mis en œuvre par un ensemble comprenant la station d'intervention 1 et un véhicule automatisé 7.

Selon un exemple, le procédé comprend une étape dans laquelle un conteneur 2 est acheminé par un véhicule automatisé 7 jusqu'à la portion d'intervention 13, et une étape d'intervention sur le conteneur 2 réalisée par un opérateur.

Typiquement, lors de l'étape d'intervention, l'opérateur est positionné dans la zone d'intervention Z, d'un premier côté d'un bord d'intervention 131 de la portion d'intervention 13, et intervient sur des conteneurs 2 acheminés sur la portion d'intervention 13 d'un autre côté du bord d'intervention 131 opposé au premier côté.

Selon un exemple dans lequel la station d'intervention 1 comprend une interface homme-machine reliée à un processeur et à une mémoire, et un actionneur tel que décrit précédemment, le procédé comprend une étape de réglage de la hauteur H de la portion d'intervention 13 dans laquelle l'opérateur envoie une instruction via ladite interface homme machine au processeur qui pilote l'actionneur pour répondre à l'instruction de l'opérateur. Ainsi, si la commande de l'opérateur est d'augmenter une hauteur de la portion d'intervention 13, ou d'adopter une valeur de hauteur préenregistrée qui implique une réhausse de la portion d'intervention 13, le processeur pilote l'actionneur pour qu'il s'allonge et lève la partie mobile 14 qui porte la portion d'intervention 13.

Le vérin pourra comporter un moyen d'asservissement configuré pour que le processeur puisse stopper l'actionneur lorsque la valeur de hauteur choisie est atteinte.

Une fois la portion d'intervention 13 réglée selon ladite instruction, l'opérateur intervient sur le conteneur 2 lors d'une étape d'intervention.

Selon un exemple particulier dans lequel la station d'intervention comprend une première et une deuxième piste de convoyage 10.1, 10.2 réglables indépendamment l'une de l'autre, le procédé comprend une première étape de réglage de la hauteur de la première piste de convoyage 10.1, dans laquelle le processeur pilote le premier actionneur, et une deuxième étape de réglage de la hauteur de la deuxième piste de convoyage 10.2 dans lequel le processeur pilote le deuxième actionneur, le réglage de la hauteur de la première étape étant indépendant du réglage de la hauteur de la deuxième étape.

Un tel exemple peut être avantageux lorsqu'un premier conteneur 2 d'une première hauteur est acheminé jusqu'à la première portion d'intervention 13.1, et un deuxième conteneur 2 d'une deuxième hauteur est acheminé jusqu'à la deuxième portion d'intervention 13.2. En effet, notamment pour des raisons ergonomiques, l'opérateur peut choisir une première valeur de hauteur adaptée au premier conteneur 2 pour la première piste de convoyage 10.1, et une deuxième valeur de hauteur adaptée au deuxième conteneur 2 pour la deuxième piste de convoyage 10.2.

De cette façon, la différence de tailles entre les deux conteneurs 2 peut être avantageusement compensée par un réglage indépendant des hauteurs des deux pistes de portions d'intervention 13.1, 13.2.

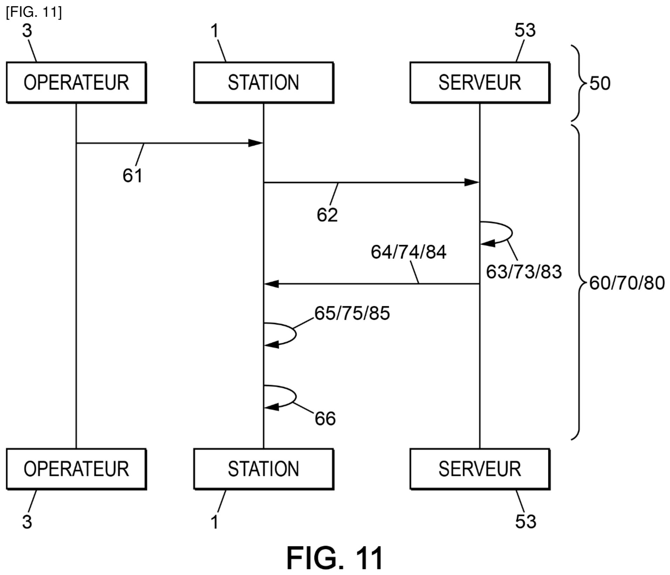

La figure 11 représente schématiquement le déroulement d'un exemple de procédé de gestion d'une station de préparation de commandes selon un mode de réalisation de l'invention.

L'invention concerne non seulement le procédé de gestion d'une station de préparation de commandes, mais encore le programme informatique exécuté par ordinateur, de gestion d'une station de préparation de commandes, qui lui est associé, et le support informatique qui lui est également associé, contenant les instructions de mise en œuvre du programme informatique exécuté par ordinateur, de gestion d'une station de préparation de commandes.

Des messages 60 sont échangés entre les différents acteurs 50 sur un réseau de télécommunication ou de communication, filaire ou sans fil. Les acteurs sont l'opérateur 3, la station 1 de préparation de commandes, également appelée station 1 d'intervention, le serveur informatique 53. Ce procédé de gestion d'une station 1 de préparation de commandes est donc réalisé ou exécuté par un réseau de télécommunication ou de communication, filaire ou sans fil.

Au niveau de la station 1 de préparation de commandes, que l'on appellera aussi station 1, un opérateur 3 humain ou robotisé, que l'on appellera aussi opérateur 3, place ou retire des articles dans des conteneurs portés par des véhicules autoguidés circulant sur une piste de la station 1. Les véhicules autoguidés sont des véhicules automatiques de transport.

Le serveur 53 est un serveur qui est déporté par rapport à la station 1, et qui est également rattaché à plusieurs autres stations de préparation de commandes. Le serveur 53 gère donc plusieurs stations de préparation de commandes, similaires ou identiques à la station 1. La station 1 de préparation de commandes, appartient donc à un groupe de plusieurs stations de préparation de commandes, à l'intérieur d'un même entrepôt de stockage d'articles. Le serveur 53 peut être une machine dédiée, ou bien un service logiciel fonctionnant en mode client-serveur, la partie client se trouvant au niveau de la station de préparation, et la partie serveur pouvant se trouver ailleurs, avantageusement en dehors de la station de préparation.

Le procédé de gestion d'une station 1 de préparation de commandes peut se dérouler de de différentes manières, en réalisant une séquence d'étapes selon un ou plusieurs cycles. Chaque cycle correspond à une séquence d'étapes. Trois cycles, un premier cycle, un deuxième cycle, un troisième cycle, sont proposés par l'invention. Dans une réalisation, le premier cycle est appelé cycle opérateur, le deuxième cycle est appelé cycle conteneur, le troisième cycle est appelé cycle profondeur. Les cycles peuvent se dérouler préférentiellement successivement, ce qui rend plus simple le procédé de gestion dans sa globalité. Les cycles pourraient éventuellement se dérouler en étant imbriqués les uns aux autres. Tout ou partie des cycles proposés par l'invention peuvent être réalisés.

Le procédé de gestion d'une station 1 de préparation de commandes peut se dérouler de la manière suivante, à chaque changement d'opérateur 3 au niveau de la station 1, en réalisant successivement les étapes qui vont maintenant être décrites et qui forment un premier cycle opérateur.

Dans une première étape de ce premier cycle opérateur, l'opérateur 3 se connecte à sa station 1, par l'intermédiaire de son identifiant. L'opérateur réalise son identification 61 auprès de sa station 1, cette identification 61 étant également son authentification auprès de la station 1. L'identifiant de l'opérateur 3 peut être, par exemple, soit sous la forme d'un code barre devant être lu par un scanner de la station 1 de préparation de commandes, soit sous la forme d'une reconnaissance faciale de l'opérateur 3 devant être vu par une caméra de la station 1 de préparation de commandes.

Dans une deuxième étape de ce premier cycle opérateur, une fois l'opérateur 3 connecté et identifié auprès de sa station 1, cette station 1 effectue l'envoi 62, vers le serveur 53, d'une requête de personnalisation incluant l'identifiant de l'opérateur 3.

Dans une troisième étape de ce premier cycle opérateur, le serveur 53, une fois l'identifiant de l'opérateur 3 reçu, effectue une détermination 63, à partir de cet identifiant de l'opérateur 3, d'une information d'ajustement de la hauteur de la piste à l'opérateur 3. Dans certains cas, cette détermination 63 peut se réduire à une simple récupération de cette information d'ajustement de la hauteur de la piste à l'opérateur 3, si cette information d'ajustement de la hauteur de la piste à l'opérateur 3 existe déjà et a été stockée dans une mémoire accessible au serveur 53. Lors de l'étape de détermination 63, l'information d'ajustement de la hauteur de la piste est de préférence déterminée de manière à ce que la hauteur cumulée, à partir du sol de l'entrepôt, du conteneur porté par le véhicule autoguidé circulant sur la piste, soit adaptée à l'opérateur 3. Lors de l'étape de détermination 63, l'information d'ajustement de la hauteur de la piste est de préférence même déterminée de manière à ce que la hauteur cumulée, à partir du sol de l'entrepôt, du conteneur porté par le véhicule autoguidé circulant sur la piste, soit adaptée à la hauteur de l'opérateur 3 debout sur le sol de l'entrepôt.

En plus de la hauteur de la piste, le serveur 53 peut également déterminer d'une part et ajouter d'autre part dans l'information d'ajustement, aussi au moins une autre caractéristique ergonomique de la piste ou de la station 1 de préparation de commandes. Cette autre caractéristique ergonomique est avantageusement une fonction dépendante de la hauteur de la piste.

Dans un mode de réalisation, cette autre caractéristique ergonomique ou l'une des autres caractéristiques ergonomiques est une inclinaison de la piste vers l'opérateur 3 au niveau de l'opérateur 3.

Dans d'autres modes de réalisation alternatifs ou cumulatifs, cette autre caractéristique ergonomique ou l'une des autres caractéristiques ergonomiques peut être :
- la hauteur d'un scanner de la piste ou de la station 1 de préparation de commandes,
- et/ou la hauteur d'un écran de la piste ou de la station 1 de préparation de commandes,
- et/ou un paramètre d'affichage sur un écran de la piste ou de la station 1 de préparation de commandes, notamment parmi la palette colorimétrique utilisée pour l'affichage à un écran de la piste ou la langue d'affichage à un écran de la piste,
- et/ou le remplacement d'un type d'alerte par un autre type d'alerte, au niveau de la station 1 de préparation de commandes, par exemple le remplacement d'une alerte sonore par une alerte visuelle affichée sur un écran de la station 1 de préparation de commandes.

Dans une alternative à ces trois premières étapes du premier cycle opérateur, l'information d'ajustement de la hauteur de la piste est obtenue à partir de la posture de l'opérateur humain dans la zone d'intervention Z. Ainsi, dans une première étape, l'opérateur se positionne dans la zone d'intervention Z de la station 1 de préparation de commandes. Une caméra capture des images ou des flux vidéos de cet opérateur réalisant des opérations sur les conteneurs. Dans une deuxième étape, ces images ou flux vidéos sont transmis, notamment en temps réel, au serveur 53 pour analyse fonctionnelle de la posture de l'opérateur. Dans la troisième étape, le serveur 53 analyse, notamment en temps réel, les positions corporelles de l'opérateur et effectue une détermination, à partir de ces positions corporelles, d'une information d'ajustement de la hauteur de la piste à l'opérateur.

Dans une quatrième étape de ce premier cycle opérateur, le serveur 53 effectue le renvoi 64, vers la station 1, d'une réponse de personnalisation incluant l'information d'ajustement préalablement déterminée. En option, la réponse de personnalisation peut aussi comprendre une information supplémentaire d'ajustement de la hauteur d'une piste supplémentaire de la station 1.

Dans une cinquième étape de ce premier cycle opérateur, un mécanisme interne de la station 1 réalise automatiquement une première action 65 d'ajustement de la hauteur de la piste par rapport au sol de l'entrepôt, à partir de l'information d'ajustement contenue dans la réponse de personnalisation. Ce mécanisme interne modifie aussi, automatiquement et le cas échéant dynamiquement, cette autre caractéristique ergonomique de manière correspondante à l'information d'ajustement, lorsque l'information d'ajustement comprend une telle caractéristique ergonomique supplémentaire.

Au niveau de sa station 1, en plus du ou des ajustements automatiques précédemment réalisés au cours du premier cycle opérateur 60, l'opérateur 3 peut affiner la hauteur de la piste par un ajustement manuel, en envoyant, au niveau de la station 1, une instruction de montée ou de descente de la hauteur de la piste au mécanisme interne. Celui-ci affine alors la hauteur de la piste de manière correspondante à l'instruction.

Dans d'autres modes de réalisation alternatifs ou cumulatifs, précédemment évoqués, le mécanisme interne de la station réalise également automatiquement une action complémentaire 66 d'ajustement :
- de la hauteur d'un scanner de la piste ou de la station 1 de préparation de commandes,
- et/ou de la hauteur d'un écran de la piste ou de la station 1 de préparation de commandes,
- et/ou d'un paramètre d'affichage sur un écran de la piste ou de la station 1 de préparation de commandes, notamment parmi la palette colorimétrique utilisée pour l'affichage à un écran de la piste ou la langue d'affichage à un écran de la piste,
- et/ou le remplacement d'un type d'alerte par un autre type d'alerte, au niveau de la station 1 de préparation de commandes, par exemple le remplacement d'une alerte sonore par une alerte visuelle affichée sur un écran de la station 1 de préparation de commandes.

Le serveur informatique 53 comprend préférentiellement un premier sous-serveur et un deuxième sous-serveur coopérant ensemble. Le premier sous-serveur est dédié au personnel de l'entrepôt, et il gère l'information d'ajustement. Le deuxième sous-serveur est dédié à la gestion des flux de conteneurs à l'intérieur de l'entrepôt, et il gère l'information d'ajustement dynamiquement adaptée. Les conteneurs peuvent être des conteneurs vides, et/ou des conteneurs remplis d'articles identiques en provenance d'une zone de stockage d'articles dans l'entrepôt, et/ou des conteneurs remplis d'articles identiques ou différents à destination d'une zone de stockage de commandes ou d'une zone d'expédition des commandes.

Dans une première option, alternative au premier cycle opérateur ou cumulative avec le premier cycle opérateur, le procédé de gestion d'une station 1 de préparation de commandes peut se dérouler de la manière suivante, à chaque changement de type de conteneur 2 ou bien de type de chargement de conteneur 2 au niveau de la station 1, en réalisant successivement les étapes qui vont maintenant être décrites et qui forment un deuxième cycle conteneur d'adaptation dynamique de la hauteur de la piste de la station 1. Seules les différences d'avec le premier cycle opérateur 60 sont maintenant décrites, les autres aspects et options du premier cycle opérateur 60 pouvant également être utilisés en liaison avec le deuxième cycle conteneur 70.

Dans une première étape de ce deuxième cycle conteneur 70, à chaque fois qu'un nouveau type de conteneur, arrive sur la piste, ou que le chargement du conteneur arrivant sur la piste change, le serveur 53 réalise l'adaptation dynamique 73 de l'information d'ajustement de la hauteur de la piste de manière à ce que, la hauteur cumulée, à partir du sol de l'entrepôt, du nouveau type de conteneur porté par le véhicule autoguidé circulant sur la piste, reste adaptée à l'opérateur 3.

Dans une deuxième étape de ce deuxième cycle conteneur 70, le serveur 53 effectue le renvoi 74, vers la station 1, d'une information d'ajustement dynamiquement adaptée.

Dans une troisième étape de ce deuxième cycle conteneur 70, le mécanisme interne 4 de la station 1 réalise une deuxième action 75 d'ajustement, de la hauteur de la piste par rapport au sol de l'entrepôt, à la fois automatiquement et dynamiquement, à partir de l'information d'ajustement dynamiquement adaptée, au moment où le nouveau type de conteneur porté par le véhicule autoguidé circulant sur la piste arrive au niveau de l'opérateur 3.

Au niveau de sa station 1, en plus du ou des ajustements automatiques précédemment réalisés au cours de ce deuxième cycle conteneur, l'opérateur 3 peut affiner la hauteur de la piste par un ajustement manuel, en envoyant, au niveau de la station 1, une instruction de montée ou de descente de la hauteur de la piste au mécanisme interne. Celui-ci affine alors la hauteur de la piste de manière correspondante à l'instruction.

Dans une deuxième option, alternative au premier cycle opérateur ou cumulative avec le premier cycle opérateur, alternative au deuxième cycle conteneur ou cumulative avec le deuxième cycle conteneur, le procédé de gestion d'une station 1 de préparation de commandes peut se dérouler de la manière suivante, à chaque changement de profondeur à laquelle l'opérateur met ou enlève un article, en réalisant successivement les étapes qui vont maintenant être décrites et qui forment un troisième cycle profondeur 80 d'adaptation dynamique de la hauteur de la piste de la station 1. Seules les différences d'avec le premier cycle opérateur 60 sont maintenant décrites, les autres aspects et options du premier cycle opérateur 60 pouvant également être utilisés en liaison avec le troisième cycle profondeur 80.

Dans une première étape de ce troisième cycle profondeur 80, à chaque changement de profondeur à laquelle l'opérateur met ou enlève un article, le serveur 53 réalise l'adaptation dynamique 83 de l'information d'ajustement de la hauteur de la piste de manière à ce que, la hauteur cumulée, à partir du sol de l'entrepôt, du conteneur porté par le véhicule autoguidé circulant sur la piste, dont est soustraite la profondeur à laquelle l'opérateur 3 met ou enlève un article, au fur et à mesure qu'il remplit ou qu'il vide le conteneur, reste adaptée à l'opérateur 3.

Dans une deuxième étape de ce troisième cycle profondeur 80, le serveur 53 effectue le renvoi 84, vers la station 1, d'une information d'ajustement dynamiquement adaptée.

Dans une troisième étape de ce troisième cycle profondeur 80, un mécanisme interne 4 de la station 1 réalise automatiquement une troisième action 85 d'ajustement, de la hauteur de la piste par rapport au sol, réalisée automatiquement et dynamiquement par le mécanisme interne 4 de la station 1, à partir de l'information d'ajustement dynamiquement adaptée, au fur et à mesure que l'opérateur 3 remplit ou vide le conteneur 2.

Au niveau de sa station 1, en plus du ou des ajustements automatiques précédemment réalisés au cours de ce troisième cycle profondeur 80, l'opérateur 3 peut affiner la hauteur de la piste par un ajustement manuel, en envoyant, au niveau de la station 1, une instruction de montée ou de descente de la hauteur de la piste au mécanisme interne. Celui-ci affine alors la hauteur de la piste de manière correspondante à l'instruction.

Bien entendu, la présente invention n'est pas limitée aux exemples et aux modes de réalisation décrits et représentés, mais elle est susceptible de nombreuses variantes accessibles à l'homme de l'art.

## Revendications

1. Procédé de gestion d'une station de préparation de commandes, au niveau de laquelle un opérateur (3) humain ou robotisé place ou retire des articles dans des conteneurs (2) portés par des véhicules autoguidés (7) circulant sur une piste (10) de la station (1), comprenant, lors d'un changement de configuration et/ou de fonctionnement au niveau de la station (1), le cycle suivant :
➢ la détermination (63, 73), par un serveur (53) déporté également rattaché à plusieurs autres stations de préparation de commandes, à partir du changement de configuration et/ou de fonctionnement au niveau de la station (1), d'une information d'ajustement de la hauteur de la piste (10) au changement de configuration et/ou de fonctionnement au niveau de la station (1),
➢ le renvoi (64, 74), du serveur (53) déporté vers la station (1), de ladite information d'ajustement,
➢ l'ajustement (65, 75), de la hauteur de la piste (10) par rapport au sol, réalisé automatiquement par un mécanisme interne (4) de la station (1), à partir de ladite information d'ajustement,
➢ le changement de configuration et/ou de fonctionnement incluant un changement d'opérateur (3),
➢ ledit cycle comprenant aussi, avant la détermination (63), l'envoi (62), de la station (1) vers le serveur (53) déporté, d'un identifiant de l'opérateur (3),
➢ ladite détermination (63), étant réalisée par le serveur (53) déporté, à partir de l'identifiant de l'opérateur (3), et détermine une information d'ajustement de la hauteur de la piste (10) à l'opérateur (3).

2. Procédé de gestion d'une station de préparation de commandes, au niveau de laquelle un opérateur (3) humain ou robotisé place ou retire des articles dans des conteneurs (2) portés par des véhicules autoguidés (7) circulant sur une piste (10) de la station (1), comprenant, à chaque changement d'opérateur (3) au niveau de la station (1), le cycle suivant :
➢ l'envoi (62), de la station (1) vers un serveur (53) déporté également rattaché à plusieurs autres stations de préparation de commandes, d'une requête de personnalisation incluant un identifiant de l'opérateur (3),
➢ la détermination (63), par le serveur (53) déporté, à partir de l'identifiant de l'opérateur (3), d'une information d'ajustement de la hauteur de la piste (10) à l'opérateur (3),
➢ le renvoi (64), du serveur (53) déporté vers la station (1), d'une réponse de personnalisation incluant l'information d'ajustement,
➢ l'ajustement (65), de la hauteur de la piste (10) par rapport au sol, réalisé automatiquement par un mécanisme interne (4) de la station (1), à partir de l'information d'ajustement.

3. Procédé de gestion d'une station de préparation de commandes selon l'une quelconque des revendications précédentes, **caractérisé en ce que** l'information d'ajustement de la hauteur de la piste (10) est déterminée de manière à ce que la hauteur cumulée, à partir du sol, du conteneur (2) porté par le véhicule autoguidé (7) circulant sur la piste (10), soit adaptée à l'opérateur (3), ladite hauteur cumulée étant en particulier comprise : entre 800mm et 1600mm, ou bien entre 1000mm et 1400mm.

4. Procédé de gestion d'une station de préparation de commandes selon la revendication 3, **caractérisé en ce que**, après ledit ajustement, à chaque fois qu'un nouveau type de conteneur (2) arrive sur la piste (10), il comprend le cycle conteneur suivant :
➢ l'adaptation dynamique (73), par le serveur (53) déporté, de l'information d'ajustement de la hauteur de la piste (10) de manière à ce que, la hauteur cumulée, à partir du sol, du nouveau type de conteneur (2) porté par le véhicule autoguidé (7) circulant sur la piste (10), reste adaptée à l'opérateur (3),
➢ le renvoi (74), du serveur (53) déporté vers la station (1), d'une information d'ajustement dynamiquement adaptée,
➢ l'ajustement (75), de la hauteur de la piste (10) par rapport au sol, réalisé automatiquement et dynamiquement par le mécanisme interne (4) de la station (1), à partir de l'information d'ajustement dynamiquement adaptée, au moment où le nouveau type de conteneur (2) porté par le véhicule autoguidé (7) circulant sur la piste (10) arrive au niveau de l'opérateur (3).

5. Procédé de gestion d'une station de préparation de commandes selon la revendication 4, **caractérisé en ce que**, après ledit ajustement ou après lesdits ajustements, à chaque changement de profondeur à laquelle l'opérateur (3) met ou enlève un article, il comprend le cycle profondeur suivant :
➢ l'adaptation dynamique (83), par le serveur (53) déporté, de l'information d'ajustement de la hauteur de la piste (10) de manière à ce que, la hauteur cumulée, à partir du sol, du conteneur (2) porté par le véhicule autoguidé (7) circulant sur la piste (10), dont est soustraite la profondeur à laquelle l'opérateur (3) met ou enlève un article, au fur et à mesure qu'il remplit ou qu'il vide le conteneur (2), reste adaptée à l'opérateur (3),
➢ le renvoi (84), du serveur (53) déporté vers la station (1), d'une information d'ajustement dynamiquement adaptée,
➢ l'ajustement (85), de la hauteur de la piste (10) par rapport au sol, réalisé automatiquement et dynamiquement par le mécanisme interne (4) de la station (1), à partir de l'information d'ajustement dynamiquement adaptée, au fur et à mesure que l'opérateur (3) remplit ou vide le conteneur (2).

6. Procédé de gestion d'une station de préparation de commandes selon l'une quelconque des revendications précédentes, **caractérisé en ce que**, en plus du ou des ajustements automatiques, l'opérateur (3) affine la hauteur de la piste (10) par un ajustement manuel, en envoyant, au niveau de la station (1), une instruction de montée ou de descente de la hauteur de la piste (10) au mécanisme interne (4) lequel affine alors la hauteur de la piste (10) de manière correspondante à l'instruction.

7. Procédé de gestion d'une station de préparation de commandes selon l'une quelconque des revendications précédentes, **caractérisé en ce que** la course verticale totale de réglage de la hauteur de la piste (10) est comprise : entre 100mm et 300mm, ou bien entre 150mm et 250mm.

8. Procédé de gestion d'une station de préparation de commandes selon l'une quelconque des revendications précédentes, **caractérisé en ce que** :
> en plus de la hauteur de la piste (10), l'information d'ajustement inclut aussi au moins une autre caractéristique ergonomique de la piste (10) ou de la station (1) de préparation de commandes,
➢ le mécanisme interne (4) modifie aussi, automatiquement et le cas échéant dynamiquement, cette autre caractéristique ergonomique de manière correspondante à l'information d'ajustement, cette autre caractéristique ergonomique étant une fonction dépendante de la hauteur de la piste (10).

9. Procédé de gestion d'une station de préparation de commandes selon la revendication 8, **caractérisé en ce que** :
➢ l'autre caractéristique ergonomique ou l'une des autres caractéristiques ergonomiques appartient à la liste suivante de caractéristiques ergonomiques :
o une inclinaison de la piste (10) vers l'opérateur (3) au niveau de l'opérateur (3)
o la hauteur d'un scanner de la piste (10) ou de la station (1) de préparation de commandes,
o la hauteur d'un écran de la piste (10) ou de la station (1) de préparation de commandes,
o un paramètre d'affichage à un écran de la piste (10) ou de la station (1) de préparation de commandes, notamment parmi :
▪ la palette colorimétrique utilisée pour l'affichage à un écran de la piste (10),
▪ la langue d'affichage à un écran de la piste (10),
o le remplacement d'un type d'alerte par un autre type d'alerte, au niveau de la station (1) de préparation de commandes :
▪ par exemple le remplacement d'une alerte sonore par une alerte visuelle affichée sur un écran de la station (1) de préparation de commandes.

10. Procédé de gestion d'une station de préparation de commandes selon l'une quelconque des revendications précédentes, **caractérisé en ce que** :
➢ la piste (10) de circulation de la station (1) comprend successivement à partir du sol :
o une première portion (15) immobile, en forme de première rampe de montée à pente fixe,
o une deuxième portion (14, 13) mobile comprenant :
▪ une deuxième rampe (14) de montée à pente variable, reliée par un pivot à la première rampe (15) de montée,
▪ une troisième rampe (13) de descente vers l'opérateur, à pente fixe ou variable,
➢ le changement de la hauteur de la piste (10) étant obtenu par le déplacement de la deuxième portion mobile (14, 13).

11. Procédé de gestion d'une station de préparation de commandes selon l'une quelconque des revendications précédentes, **caractérisé en ce que** :
➢ la réponse de personnalisation comprend une information supplémentaire d'ajustement de la hauteur d'une piste supplémentaire (10.2) de la station (1),
➢ le mécanisme interne (4) de la station (1) réalise également automatiquement l'ajustement, de la hauteur de la piste supplémentaire (10.2) par rapport au sol, à partir de l'information supplémentaire d'ajustement.

12. Procédé de gestion d'une station de préparation de commandes selon la revendication 11, **caractérisé en ce que** :
➢ la piste (10.1) de la station (1) est une piste de circulation de conteneurs (2) portés par des véhicules autoguidés (7), les conteneurs (2) :
o arrivant vides auprès de l'opérateur (3) qui les remplit avec des articles,
o et repartant remplis en quittant l'opérateur (3),
➢ la piste supplémentaire (10.2) de la station (1) est une piste de circulation de conteneurs (2) portés par des véhicules autoguidés (7), les conteneurs (2) :
o arrivant pleins auprès de l'opérateur (3) qui les vide de leurs articles,
o et repartant vides en quittant l'opérateur (3).

13. Procédé de gestion d'une station de préparation de commandes selon l'une quelconque des revendications précédentes, **caractérisé en ce que** le mécanisme interne (4) de la station (1) comprend un ou plusieurs vérins (43), de préférence deux vérins (43), situés sous la piste (10) ou sous les pistes (10.1, 10.2), de manière à pouvoir soulever ou abaisser la piste (10) ou les pistes (10.1, 10.2).

14. Procédé de gestion d'une station de préparation de commandes selon l'une quelconque des revendications précédentes, **caractérisé en ce que** le cycle comprend, avant l'envoi de la requête de personnalisation, la connexion de l'opérateur (3) à sa station (1), par l'intermédiaire de son identifiant.
➢ l'identifiant de l'opérateur (3) étant en particulier:
o soit sous la forme d'un code barre devant être lu par un scanner de la station (1) de préparation de commandes,
o soit sous la forme d'une reconnaissance faciale de l'opérateur (3) devant être vu par une caméra de la station (1) de préparation de commandes.

15. Procédé de gestion d'une station de préparation de commandes, appartenant à un groupe de stations de préparation de commandes d'un entrepôt, selon l'une quelconque des revendications précédentes, **caractérisé en ce que** :
➢ le serveur (53) déporté comprend :
∘ un premier sous-serveur,
▪ dédié au personnel de l'entrepôt,
▪ gérant l'information d'ajustement,
o un deuxième sous-serveur,
▪ dédié à la gestion des flux de conteneurs (2) à l'intérieur de l'entrepôt,
• de conteneurs (2) vides,
• et/ou de conteneurs (2) remplis d'articles identiques en provenance d'une zone de stockage d'articles dans l'entrepôt,
• et/ou de conteneurs (2) remplis d'articles identiques ou différents à destination d'une zone de stockage de commandes ou d'une zone d'expédition des commandes,
▪ gérant l'information d'ajustement dynamiquement adaptée.
